# EUROPÄISCHE PATENTSCHRIFT

(11) **EP 0 504 211 B1**
(45) Veröffentlichungstag und Bekanntmachung des Hinweises auf die Patenterteilung: **11.08.1993**
(21) Anmeldenummer: 91900250.1
(22) Anmeldetag: 06.12.1990
(51) Int. Cl.: B65G 19/24, B65G 19/14, B65G 23/06, F16B 2/06

(54) **STAUSCHEIBENFÖRDERER**
RETARDING-DISC CONVEYOR
TRANSPORTEUR A DISQUES RALENTISSEURS

(30) Priorität: 06.12.1989 DE 3939743
(43) Veröffentlichungstag der Anmeldung: 23.09.1992
(73) Patentinhaber: VSR Engineering GmbH Fördertechnik, D-45472 Mülheim (DE)
(72) Erfinder: RAPPEN, Albert Dipl.-Ing., D-4330 Mülheim/Ruhr (DE)
(74) Vertreter: Schumacher, Horst, Dr. Dipl.-Phys.
(86) Internationale Anmeldenummer: EP9002107
(87) Internationale Veröffentlichungsnummer: WO9108156

(56) Entgegenhaltungen:
- FR-A- 1 162 757
- FR-A- 1 459 708
- FR-A- 2 347 283
- FR-A- 2 383 095
- FR-A- 2 383 096
- GB-A- 2 111 935
- US-A- 2 235 991

## Beschreibung

Die Erfindung betrifft einen Stauscheibenförderer nach dem Oberbegriff von Anspruch 1.

Es ist Stand der Technik, daß Stauscheibenförderer das aufgegebene Schüttgut durch Scheiben bewegen, die auf einzelne Kettenglieder der durchgehenden Kette aufgeschraubt oder aufgegossen sind. Durch den Eingriff der Zähne in den Umlenk- und Antriebsstationen der einzelnen Kettenglieder wirkt dieser Stauscheibenförderer sehr laut und hat verschiedene andere Nachteile. Eine Verbesserung stellt ein Stauscheibenförderer mit einem durchgehenden glatten Zugmittel, wie z.B. mit einem Stahlseil dar. Hier werden auf das Stahlseil einzelne Knoten und Preßstücke (GB 2111 935A) aufgequetscht. Zwei Halbschalen einer Stauscheibe, die eine gemeinsame Durchmesserfläche haben, werden über diese Preßstücke gestülpt und miteinander verschraubt. Die Stauscheiben werden durch um ein Antriebsrad umlaufende Gabeln angetrieben, die das Zugseil umfassen und gegen die Flächen der Stauscheiben drücken. Es werden hohe Anforderungen an die Gleichmäßigkeit der Teilung gestellt, damit die Antriebsleistung gleichmäßig über alle im Umlaufkreis befindlichen Stauscheiben übernommen und übertragen wird. Bei einer gewissen Ungleichmäßigkeit wird die gesamte Antriebsleistung nur über eine Stauscheibe auf das Zugelement übertragen und es entstehen Beschleunigungsstöße. Derartige Stauscheibenförderer erlauben daher nur eine geringe Antriebsleistung, sind anfällig für Drahtseilbrüche und sind wenig geeignet für eine Führung der Förderstrecke.

Durch die Verwendung eines weiteren bekannten Zugelementes aus hochfestem Aramid mit hoher Biegewechselfestigkeit wird das Problem der Dauerbrüche wegen begrenzter Biegewechselfestigkeit der Stahlseilzugselemente zwar beseitigt, aber die Stauscheibenbefestigung und Gleichmäßigkeit der Krafteinleitung ist umbefriedigend bzw. nicht gelöst. Es ist daher Aufgabe dieser Erfindung unter Verwendung eines insbesondere korrosionsfreien, vorzugsweise biegefesten durchgehenden Zugelementes einen Stauscheibenförderer zu schaffen, der die aufgewiesenen Nachteile nicht hat und der zudem eine hohe Kraftübertragung erlaubt. Eine weitgehend universelle vielkurvige Verwendbarkeit sowie eine einfache Montage und Austauschbarkeit der Stauscheiben ist ebenfalls erwünscht.

Diese Aufgabe wird durch einen Stauscheibenförderer mit den Merkmalen des Anspruchs 1 gelöst.

Zweckmäßige Ausgestaltungen des Erfindungsgegenstandes, die insbesondere eine gleichmäßige Krafteinleitung und eine hohe Kraftübertragung auf die Stauscheiben bzw. den durchgehenden Zugkörper, eine einfache, wieder lösbare Stauscheibenbefestigung und Austauschbarkeit der Stauscheiben sowie eine weitgehende universelle vielkurvige Verwendbarkeit des Stauscheibenförderers gewährleisten, sind in den Ansprüchen enthalten.

Weitere Einzelheiten, Merkmale und Vorteile des Gegenstandes der Erfindung ergeben sich aus der vorangehenden Beschreibung der zugehörigen Zeichnung, in der bevorzugte Ausführungsformen eines erfindungsgemäßen Stauscheibenförderers beispielhaft dargestellt sind. Die vorangegangenen sowie die beanspruchten und in den Ausführungsbeispielen beschriebenen erfindungsgemäß zu verwendenden Bauteile unterliegen in ihrer Größe, Formgestalt, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

In der Zeichnung zeigen:
- Fig. 1: eine Stauscheibe im Axialschnitt;
- Fig. 2: dieselbe Stauscheibe in linker Seitenansicht;
- Fig. 3: eine alternative Ausführungsform einer Stauscheibe im Axialschnitt;
- Fig. 4: von einem Stauscheibenförderer eine Ansicht von oben in eine Umlenk/An-triebs-Station (Ansicht B gemäß Fig. 5);
- Fig. 5: von derselben Umlenk/Antriebs-Station eine Seitenansicht (Ansicht A gemäß Fig. 4) sowie
- Fig. 6a/b: eine ähnliche Umlenk/Antriebs-Station wie in Fig. 4 und 5 mit alternartiven Ausführungsformen der Antriebsgabeln und Speichenelemente.

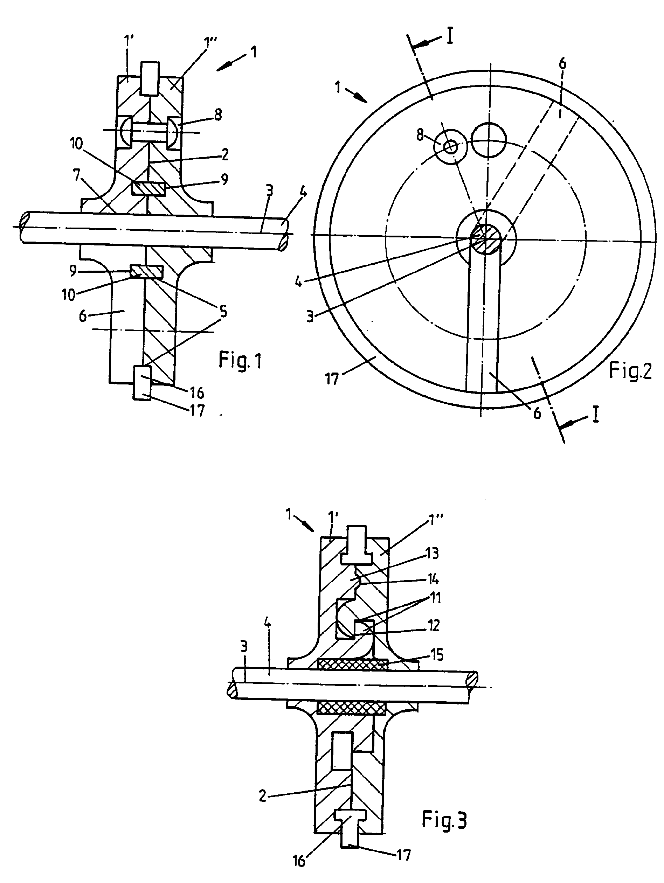

Gemäß Figuren 1 bis 3 sind die Stauscheiben 1 in einer Ebene 2 senkrecht zur Achse 3 des Zugkörpers 4 geteilt. Sie sind zueinander durch Kreisringführungselemente 5 konzentrisch verdrehbar und haben einen radialen, hufeisenartigen Durchbruch 6, so daß die Scheiben einzeln auf den Zugkörper geschoben und nach dem Verdrehen gegeneinander verriegelt sind, so daß sie nicht ohne weiteres wieder von dem Zugkörper herabfallen können.

Die Bohrungen für den Zugkörper sind nun nicht geradlinig, sondern in der Mitte der Stauscheibe durch ein geringes Maß 7 , z.B. 1-2 mm bei einem Zugkörperdurchmesser von 10-15 mm versetzt. Beim Verdrehen der Stauscheibenteile gegeneinander wird die gemeinsame Durchbruchsöffnung aufgrund der nicht konzentrischen Anordnung zur Drehachse verkleinert, so daß sich die Stauscheibe auf diese Weise auf den Zugkörper elastisch aufklemmt. Das Zurückdrehen und Auseinanderfallen der Stauscheibenteile wird verhindert dadurch, daß sie fest miteinander verbunden werden, z.B. dadurch, daß sie durch Bohrungen 8 auf einem gemeinsamen Lochkreis miteinander verschraubt oder vernietet werden. Alternativ oder kumulativ kann die Bohrung auch einen spitzen Winkel mit der Stauscheibenachse bilden.

Die konzentrische Verdrehbarkeit der Stauscheibenteile gegeneinander wird z.B. durch korrespondierende innere und äußere Führungsringe erzeugt, vorzugsweise durch gegenüberliegende Kreisnuten 9 , in die ein separater Führungsring 10 eingelegt wird. Auf diese Weise können die beiden Scheibenteile identisch sein und aus derselben Form hergestellt werden.

Die Stauscheibenteil halten sich gegenseitig, wenn sie auf einem Kreisring korrespondierende Vorsprünge und Durchbrüche oder Ausnehmungen haben mit umlaufenden Klauen 11 bzw. Hinterschneidungskanten 12, hinter denen sich beim Verdrehen die Klauen festsetzen können, vorzugsweise, indem die Vorsprünge und die Durchbrüche jeweils einander gegenüberliegen, um 180 Grad versetzt sind und einen Kreisumfang von etwas weniger bzw. mehr als 90 Grad einnehmen. Dann ist es möglich, daß die identischen Stauscheibenhälften aus der gleichen Form verwendet werden, die um mindestens 90 Grad verdreht werden können, um vorzugsweise über diesen Verdrehweg die volle Verquetschung zu erreichen. Die Arretierung der Hälften gegeneinander geschieht vorzugsweise durch im Kreisring angeordnete, gerasterte, gegenüberliegende Vorsprünge 13 und Vertiefungen 14, die sich nach dem Verdrehen reib- und formschlüssig halten.

Die kupplungsartige Verbindung der beiden Stauscheibenteile kann auch genutzt werden, um sie über einem auf dem Zugkörper festgeklemmten Preßstück 15 zu montieren.

Die Stauscheibenhälften haben über dem Umfang eine gemeinsame Nut 16 zur Aufnahme von metallischen oder elastischen Verschleißringen 17 unterschiedlicher Größe, so daß durch geeignete Auswahl dieser Ringe die Stauscheiben an die einzelne Förderaufgabe und den jeweiligen Rohrdurchmesser angepaßt werden können und ein einfacher Austausch der Verschleißkörper möglich ist.

Durch diese beschriebene Befestigungsart der Stauscheibe auf dem Zugkörper sind sowohl hohe Übertragungskräfte als auch weitgehend exakte Abstandseinstellungen der Scheiben zwischeneinander möglich. Eine Erhöhung der übertragenen Leistung ist zusätzlich möglich, indem die Gabeln 21 , die beidseitig des Zugkörpers gegen die Stauscheiben drücken und ihre Mittenposition auf dem Kreisringdurchmesser 22 des Umlaufrades haben. Sie befinden sich am Ende auf einem radialförmig von einer inneren Antriebsachse 23 abstehenden in Tangentialrichtung federnden Speichenelement 24 , so daß bei einer Überlastung einer einzelnen Stauscheibe diese Gabel tangential elastisch etwas nachgibt und auf diese Weise ein gleichmäßiger Gabeltraganteil entsteht.

Zur Verbesserung der Umlaufgleichförmigkeiten werden der Zugkörper bzw. die Stauscheibe je Sektor durch mindestens 2 Querstege 25 unterstützt.

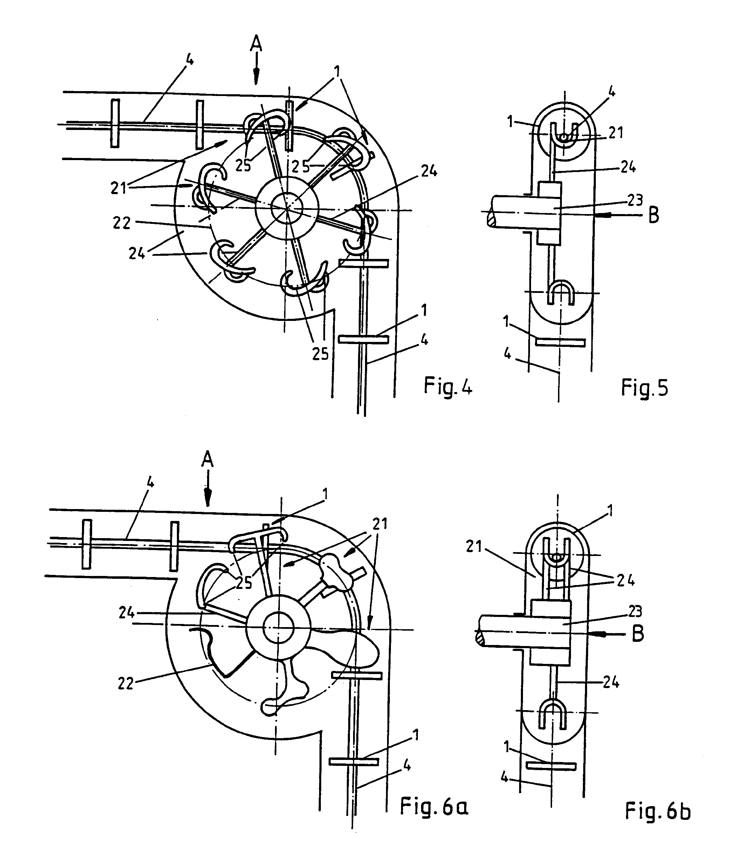

Es versteht sich, daß Umlenk- bzw. Antriebsstationen gemäß Fig. 4 bis 6b unabhängig von der konkreten Stauscheibenausgestaltung und Stauscheibenbefestigung vorteilhafte Elemente eines Stauscheibenförderers darstellen.

## Patentansprüche

1. Stauscheibenförderer, zumindest bestehend aus einem durchgehenden Zugkörper (4) und auf dem Zugkörper mit Abstand in Zugrichtung voneinander getrennt befestigten, mindestens zweiteiligen Stauscheiben (1), bei dem die Stauscheiben (1) in der Querschnittsebene (2) des Zugkörpers (4) geteilt sind und mindestens je einen radialen Durchbruch (6) aufweisen, der ein im wesentlichen konzentrisches Ausbringen der Stauscheibenhälfte (1',1'') auf den Zugkörper (4) erlaubt, dadurch gekennzeichnet, daß die Stauscheibenhälfter im Sinne einer gegenseitigen Verdrehbarkeit zueinander korrespondierende Zentrierungselemente (5; 11; 16) aufweisen und daß die Stauscheibenhälften (1',1'') durch Verdrehen zueinander auf dem Zugkörper (4) - mittelbar oder unmittelbar - festklemmbar sind.

2. Stauscheibenförderer nach Anspruch 1, dadurch gekennzeichnet, daß die Stauscheibenhälften (1', 1'') mittels konzentrischer kreisring- oder kreisringsegmentförmiger Führungsflächen, gegeneinander verdrehbar sind.

3. Stauscheibenförderer nach Anspruch 2, dadurch gekennzeichnet, daß die Stauscheibenhälften (1', 1'') konzentrische einander gegenüberliegende durchgehende oder segmentförmige Nutenringe haben, in die ein Ring (10; 17) oder mindestens ein Ringsegment zur konzentrischen Verdrehbarkeit der beiden Hälften eingesetzt ist.

4. Stauscheibenförderer nach einem der vorherigen Ansprüche, insbesondere nach einem der Ansprüche 1 bis 3, dadurch gekennzeichnet, daß Durchbohrungen der beiden Stauscheibenhälften (1', 1'') zur Aufnahme des Zugkörpers (4) in der gemeinsamen Berührungsebene (Querschnitts ebene 2) in der fertig montierten Position zueinander achsversetzt sind.

5. Stauscheibenförderer nach einem der vorherigen Ansprüche, dadurch gekennzeichnet, daß die Stauscheiben einander korrespondierende Lochkreise haben und durch Schrauben, Nieten o. dgl. in der jeweiligen Verdrehstellung gegeneinander gehalten werden.

6. Stauscheibenförderer nach einem der vorherigen Ansprüche, dadurch gekennzeichnet, daß die Stauscheibenhälften (1', 1'') kreisringsegmentförmige, konzentrische Vorsprünge (11) und Durchbrechungen oder Vertiefungen haben, vorzugsweise um je etwa 90 Grad versetzt, wobei sich die Vorsprünge vorzugsweise über einen geringeren Kreiswinkel erstrecken als die Durchbrechungen oder Vertiefungen, und daß die Vorsprünge Klauen bzw. die Durchbrechungen oder Vertiefungen korrespondierende Hinterschneidungsflächen (12) haben, die sich beim Verdrehen der Stauscheibenhälften zueinander im gegenseitigen Eingriff befinden.

7. Stauscheibenförderer nach einem der vorherigen Ansprüche, dadurch gekennzeichnet, daß die beiden Stauscheibenhälften (1', 1'') auf einer gemeinsamen konzentrischen Berührungskreisringfläche Erhöhungen (13) und Vertiefungen (14) haben, die form- und/oder reibschlüssig verhindern, daß sich die Scheibenteile selbständig gegeneinander verdrehen können.

8. Stauscheibenförderer nach einem der vorherigen Ansprüche, dadurch gekennzeichnet, daß die Stauscheibenhälften (1', 1'') über den Außenumfang eine gemeinsame Nut (16) haben und darin einen Kreisringkörper (17), insbesondere als Verschleißelement, zur Anpassung Durchmessers und/oder des Werkstoffes an die einzelne Aufgabe bzw. den Förderrohrdurchmesser haben.

9. Stauscheibenförderer nach einem der vorherigen Ansprüche, dadurch gekennzeichnet, daß die Stauscheiben (1) durch Gabeln (21) an den Rädern einer Umlenk- oder Antriebsstation geführt oder angetrieben werden und die Gabeln mit der Achse jeweils durch mindestens ein in tangentialer Richtung elastisch wirkendes Federelement (24) verbunden sind.

10. Stauscheibenförderer nach Anspruch 8, gekennzeichnet, durch mindestens eine federnde Speiche (24).

11. Stauscheibenförderer nach einem der vorherigen Ansprüche, dadurch gekennzeichnet, daß durch mindestens zwei Querstege pro Stauscheibe die axialen Umlenkkräfte an einem Speichenrad oder dergleichen für den Zugkörper aufgenommen werden.

12. Stauscheibenförderer nach einem der vorherigen Ansprüche, dadurch gekennzeichnet, daß die Stauscheibenhälften (1', 1'') über einem auf dem Zugkörper (4) befestigten Haltestück (15) montiert oder montierbar sind.

13. Stauscheibenförderer nach einem der vorherigen Ansprüche, dadurch gekennzeichnet, daß die Scheibenhälften (1', 1'') identisch ausgebildet sind.

## Claims

1. Retarding-disc conveyor, at least consisting of a continuous traction-body (4) and at least two-part retarding discs (1) fixed to the traction-body and spaced apart from one another in the direction of pull, wherein the retarding discs (1) are divided in the cross-sectional plane (2) of the traction-body (4) and have at least one radial hole (6) each, which permits substantially concentric mounting of the retarding disc halves (1',1'') on the traction-body (4), characterised in that the retarding disc halves have centering elements (5;11;16) corresponding to one another in a relatively rotatable manner, and in that the retarding disc halves (1', 1'') are lockable, directly or indirectly, by rotation relative to one another on the traction-body (4).

2. Retarding-disc conveyor according to claim 1, characterised in that the retarding disc halves (1', 1'') are rotatable relative to one another by means of concentric ring-shaped or ring segment-shaped guide faces.

3. Retarding-disc conveyor according to claim 2, characterised in that the retarding disc halves (1', 1'') have concentric, mutually opposite, continuous or segment-shaped grooved rings, into which a ring (10;17) or at least one ring segment is inserted to allow the two halves to rotate concentrically.

4. Retarding-disc conveyor according to one of the preceding claims, in particular according to one of claims 1 to 3, characterised in that through-bores in the two retarding disc halves (1', 1'') are axially offset relative to one another to receive the traction-body (4) in the common plane of contact (cross-sectional plane 2) in the fully assembled position.

5. Retarding-disc conveyor according to one of the preceding claims, characterised in that the retarding discs have perforated circles corresponding to one another and are held against one another by screws, rivets or the like in the respective rotational position.

6. Retarding-disc conveyor according to one of the preceding claims, characterised in that the retarding disc halves (1', 1'') have ring segment-shaped, concentric projections (11) and holes or recesses, each preferably offset by approximately 90 degrees, and the projections preferably extend over a smaller angle than the holes or recesses, and in that the projections have claws, and the holes or recesses have corresponding undercut faces (12), which engage with one another when the retarding disc halves are rotated relative to one another.

7. Retarding-disc conveyor according to one of the preceding claims, characterised in that the two retarding disc halves (1', 1'') have bumps (13) and recesses (14) on a common concentric contact ring face, which by positive locking and/or friction locking prevent the disc parts from independent relative rotation.

8. Retarding-disc conveyor according to one of the preceding claims, characterised in that the retarding disc halves (1', 1'') have over the outer circumference a common groove (16) and a ring body (17) therein, in particular as an abrasion element, for adapting the diameter and/or the material to the individual task or conveyor tube diameter.

9. Retarding-disc conveyor according to one of the preceding claims, characterised in that the retarding discs (1) are guided or driven by forks (21) on the wheels of a deflecting or drive station, and the forks are connected to the shaft by at least one respective spring element (24) acting resiliently in the tangential direction.

10. Retarding-disc conveyor according to claim 8, characterised by at least one resilient spoke (24).

11. Retarding-disc conveyor according to one of the preceding claims, characterised in that the axial deflecting forces on one spoked wheel or the like for the traction body are taken up by at least two transverse webs per retarding disc.

12. Retarding-disc conveyor according to one of the preceding claims, characterised in that the retarding disc halves (1', 1'') are mounted or mountable via a holding member (15) fixed to the traction-body (4).

13. Retarding-disc conveyor according to one of the preceding claims, characterised in that the disc halves (1' 1,'') are identically formed.

## Revendications

1. Transporteur à disques ralentisseurs, constitué d'au moins un corps de traction (4) continu et de disques ralentisseurs (1) au moins en deux parties, fixés sur le corps de traction, espacés les uns des autres dans le sens de la traction, dans lequel les disques ralentisseurs (1) sont partagés dans le plan de section transversale (2) du corps de traction (4) et comportent chacun au moins un ajour (6) radial, qui permet d'appliquer pratiquement concentriquement les moitiés de disque ralentisseur (1', 1'') sur le corps de traction (4), caractérisé en ce que les moitiés de disque ralentisseur comportent des éléments de centrage (5 ; 11 ; 16) se correspondant les uns les autres, de manière à autoriser une rotation réciproque et en ce que les moitiés de disque ralentisseur (1', 1'') peuvent être bloquées- directement ou indirectement - par rotation les unes par rapport aux autres sur le corps de traction (4).

2. Transporteur à disques ralentisseurs selon la revendication 1, caractérisé en ce que les moitiés de disque ralentisseur (1', 1'') peuvent tourner les unes par rapport aux autres au moyen de surfaces de guidage concentriques en forme d'anneaux circulaires ou de segments d'anneaux circulaires.

3. Transporteur à disques ralentisseurs selon la revendication 2, caractérisé en ce que les moitiés de disque ralentisseur (1', 1'') possèdent des rainures annulaires concentriques, continues ou en forme de segments, se faisant face les unes les autres, dans lesquelles est inséré un anneau (10 ; 17) ou au moins un segment d'anneau en vue de la rotation concentrique des deux moitiés.

4. Transporteur à disques ralentisseurs selon l'une des revendications précédentes, en particulier selon l'une des revendications 1 à 3, caractérisé en ce que des trous traversant les deux moitiés de disque ralentisseur (1', 1''), destinés à loger le corps de traction (4) dans le plan de contact commun (plan de section transversale 2) ont des axes décalés les uns par rapport aux autres dans la position définitive de montage.

5. Transporteur à disques ralentisseurs selon l'une des revendications précédentes, caractérisé en ce que les disques ralentisseurs possèdent des cercles perforés correspondant les uns aux autres et sont maintenus, les uns contre les autres, par des vis, des rivets ou similaires, dans la position de rotation respective.

6. Transporteur à disques ralentisseurs selon l'une des revendications précédentes, caractérisé en ce que les moitiés de disque ralentisseur (1', 1'') possèdent des saillies (11) concentriques en forme de segments d'anneaux circulaires et des ajours ou des creux, décalés de préférence de 90 degrés environ, les saillies s'étendant de préférence sur un angle de cercle plus petit que les ajours ou les creux et en ce que les saillies possèdent des griffes ou les ajours et les creux, des surfaces détalonnées (12) correspondantes, qui se trouvent en prise réciproque lors de la rotation des moitiés de disque ralentisseur les unes par rapport aux autres.

7. Transporteur à disques ralentisseurs selon l'une des revendications précédentes, caractérisé en ce que les deux moitiés de disque ralentisseur (1', 1'') possèdent, sur une surface annulaire circulaire de contact, commune et concentrique, des reliefs (13) et des creux (14) qui empêchent, par forme et/ou par friction, que les parties de disque puissent tourner de manière autonome les unes par rapport aux autres.

8. Transporteur à disques ralentisseurs selon l'une des revendications précédentes, caractérisé en ce que les moitiés de disque ralentisseur (1', 1'') possèdent, sur le pourtour extérieur, une rainure (16) commune et à l'intérieur de celle-ci un corps annulaire circulaire (17), servant en particulier d'éléments d'usure, pour l'adaptation du diamètre et/ou de la matière au problème spécifique ou au diamètre du transporteur.

9. Transporteur à disques ralentisseurs selon l'une des revendications précédentes, caractérisé en ce que les disques ralentisseurs (1) sont guidés ou entraînés par des fourches (21) sur les roues d'un poste de renvoi ou d'entraînement et les fourches sont reliées à l'axe par au moins un élément à ressort (24) agissant élastiquement dans la direction tangentielle.

10. Transporteur à disques ralentisseurs selon la revendication 8, caractérisé par au moins un rayon (24) formant ressort.

11. Transporteur à disques ralentisseurs selon l'une des revendications précédentes, caractérisé en ce que les forces de renvoi axiales sont absorbées par au moins deux traverses par disque ralentisseur, sur une roue à rayons ou similaire pour le corps de traction.

12. Transporteur à disques ralentisseurs selon l'une des revendications précédentes, caractérisé en ce que les moitiés de disque ralentisseur (1', 1'') sont montées ou peuvent être montées par l'intermédiaire d'une pièce de maintien (15) fixée sur le corps de traction (4).

13. Transporteur à disques ralentisseurs selon l'une des revendications précédentes, caractérisé en ce que les moitiés de disque (1', 1'') sont conçues à l'identique.
